# EUROPEAN PATENT SPECIFICATION

(11) **EP 0 834 410 B1**
(45) Date of publication and mention of the grant of the patent: **01.12.2004**
(21) Application number: 97116564.2
(22) Date of filing: 23.09.1997
(51) Int. Cl.: B60H 1/00, G05G 5/06

(54) **Sliding structure for manual control member**
Lagereinheit eines Handschalthebels
Unité de glissement pour une commande manuelle

(30) Priority: 02.10.1996 JP 26220096
(43) Date of publication of application: 08.04.1998
(73) Proprietor: HONDA GIKEN KOGYO KABUSHIKI KAISHA, Minato-ku, Tokyo 107 (JP)
(72) Inventor: Oishi, Koji, 1-4-1 Chuo, Wako-shi, Saitama-ken (JP); Imai, Akira, 1-4-1 Chuo, Wako-shi, Saitama-ken (JP); Takahashi, Motoji, 1-4-1 Chuo, Wako-shi, Saitama-ken (JP); Miyauchi, Takehiko, 1-4-1 Chuo, Wako-shi, Saitama-ken (JP)
(74) Representative: Prechtel, Jörg, Dipl.-Phys. Dr.

(56) References cited:
- EP-A- 0 669 217
- US-A- 4 466 456

## Description

### BACKGROUND OF THE INVENTION

### Field of the Invention:

The present invention relates to a sliding structure for use with a manual control member such as a control lever, a control knob, etc., the sliding structure being capable of making loads applied to the manual control member constant while it is in operation.

### Description of the Related Art:

There has heretofore been known a structure by which a manual control lever such as a heater control lever or the like in motor vehicles is angularly movably supported on an attachment board, as disclosed in Japanese utility model publication No. 6-42256, for example.

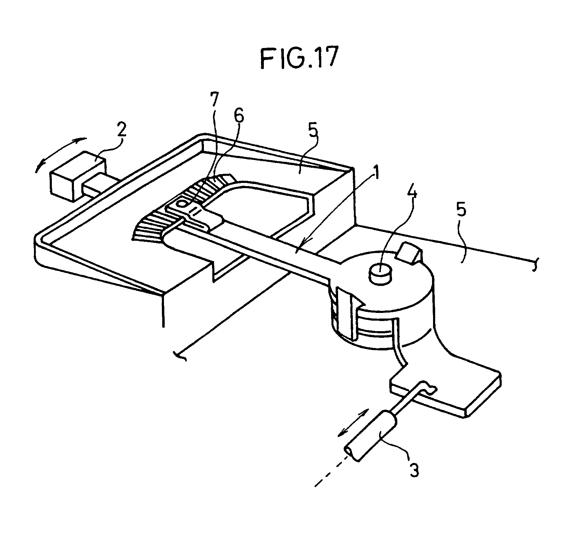

FIG. 17 of the accompanying drawings shows such a known structure. As shown in FIG. 17, a knob 2 is mounted on an end of a control lever 1 and a control cable 3 for transmitting manual control forces is coupled at one end thereof to the other end of the control lever 1. The control lever 1 is angularly movably mounted on an attachment board 5 by a shaft 4. To the attachment board 5, there is fixed an engagement plate 6 having a plurality of successive ridges that are engaged by a leaf spring 7 secured centrally to the control lever 1.

When the control lever 1 is turned a certain angle about the shaft 4 in one of the directions indicated by the arrows, the control cable 3 is axially displaced in one of the directions indicated by the arrows. Upon the angular movement of the control lever 1, the control lever 1 and the leaf spring 7 are angularly displaced in unison with each other, with the leaf spring 7 sliding along the engagement plate 6. The control lever 1 stops in an arbitrary angular position when a projection on the leaf spring 7 engages in one of the grooves between the ridges of the engagement plate 6.

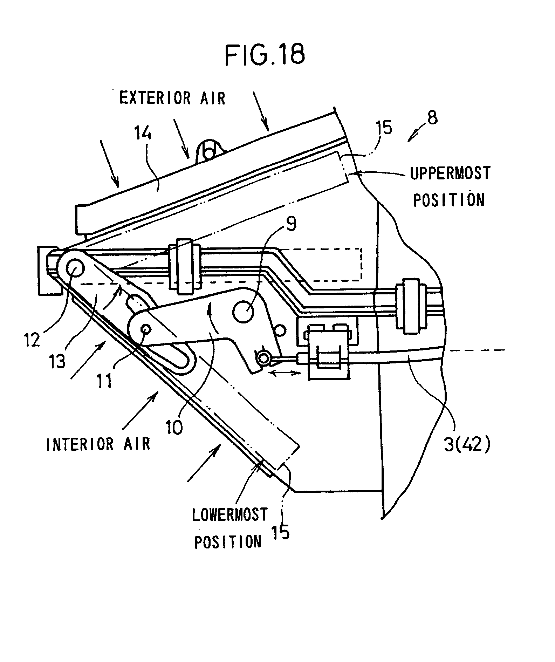

The control lever 1 may be used in an air-conditioning unit for use with motor vehicles. In such an application, the control cable 3 has its other end connected to an interior/exterior air selector 8 of the air-conditioning unit shown in FIG. 18 of the accompanying drawings. The interior/exterior air selector 8 comprises a first link 10 coupled to the end of the control cable 3 and angularly movable a given angle in the direction indicated by the arrow about a first pin 9, and a second link 13 held in engagement with the first link 10 through a second pin 11 and angularly movable a given angle about a third pin 12. The air-conditioning unit has a casing 14 which houses the interior/exterior air selector 8.

A damper 15 is coupled to the second link 13 through the third pin 12 for angular movement in unison with the second link 13 about the third pin 12.

When the control cable 3 is axially displaced, the first and second links 10, 13 are angularly moved to open or close the damper 15 for introducing either interior air into the air-conditioning unit or exterior air into the airconditioning unit.

When the control lever 1 is angularly moved to enable the control cable 3 to turn the damper 15 from a lowermost position to an uppermost position, the weight of the damper 15 is applied progressively increasingly to the control lever 1, and as a result, the load on the control lever 1 progressively increases. As a consequence, the operator of the control lever 1 is required to impose progressively greater manual control forces on the control lever 1.

The load applied to the control lever 1 due to the weight of the damper 15 may be reduced by a spring (not shown) which would be inserted to act between the casing 14 and the second link 13. However, the number of parts required would be increased because of the spring, the second link 13 would need to be apertured for attachment of the spring, and an additional assembling process would be required to install the spring in position. As a result, the cost of the air-conditioning unit would become undesirably high.

EP-A-0 669 217 discloses a sliding structure in accordance with the preamble of claim1.

### SUMMARY OF THE INVENTION

It is a general object of the present invention to provide a sliding structure which is capable of making loads applied to a manual control member constant while it is in operation.

Another object of the present invention is to provide a sliding structure for producing uniform and smooth control forces in a full range thereof for a control member.

Still another object of the present invention is to provide a sliding structure which is relatively simple for making loads applied to a manual control member constant and hence which is relatively low in cost.

At least the general object is achieved by a sliding structure according to claim1.

Preferred embodiments of the invention are defined in the subclaims.

The above and other objects, features and advantages of the present invention will become more apparent from the following description when taken in conjunction with the accompanying drawings in which preferred embodiments of the present invention are shown by way of illustrative example.

### BRIEF DESCRIPTION OF THE DRAWINGS

FIG. 1 is a front elevational view of a control panel assembly of an air-conditioning unit for motor vehicles, which incorporates a sliding structure for a manual contorl lever according to the present invention;
FIG. 2. is a bottom view of the control panel assembly as viewed in the direction indicated by the arrow Z in FIG 1;
FIG. 3 is a vertival cross-sectional view taken along line III - III of FIG. 1;
FIG. 4 is a fragmentary view of a click mechanism of a control lever;
FIG. 5 is a diagram showing the relationship between a load characteristic curve representing a load due to the weight of a damper, a sliding characteristic curve representing sliding properties between a ball and first and second engaging surfaces, and a load characteristic curve representing a load applied to the control lever;
FIG. 6 is a diagram showing characteristic curves with a conventional control lever;
FIG. 7 is a front elevational view of a plurality of control levers of an air-conditioning unit for motor vehicles, which incorporates the sliding structure shown in FIG. 1;
FIG. 8 is a fragmentary bottom view showing a click member of one of the control levers shown in FIG. 7, i.e., a mode selection control lever;
FIG. 9 is a fragmentary bottom view showing a click member of another one of the control levers shown in FIG. 7, i.e., a temperature setting control lever;
FIG. 10 is a cross-sectional view showing a sliding structure for a manual control knob according to another embodiment of the present invention;
FIG. 11 is an enlarged fragmentary view showing a click mechanism of a temperature setting control knob shown in FIG. 10;
FIG. 12 is an enlarged fragmentary view showing a click mechanism of a mode selection control lever shown in FIG. 10;
FIG. 13 is a fragmentary view of a plurality of link mechanisms and dampers which are connected to a control lever;
FIG. 14 is a perspective view showing a water valve which can be operated together with an air mix damper by a control lever;
FIG. 15 is a fragmentary view of a structure by which the air mix damper and the water valve are connected to each other;
FIG. 16 is a view of the water valve connected to the control lever;
FIG. 17 is a perspective view of a conventional control lever; and
FIG. 18 is a fragmentary view showing an interior/exterior air selector of an air-conditioning unit for motor vehicles, which is coupled to the control lever shown in FIG. 17.

### DESCRIPTION OF THE PREFERRED EMBODIMENTS

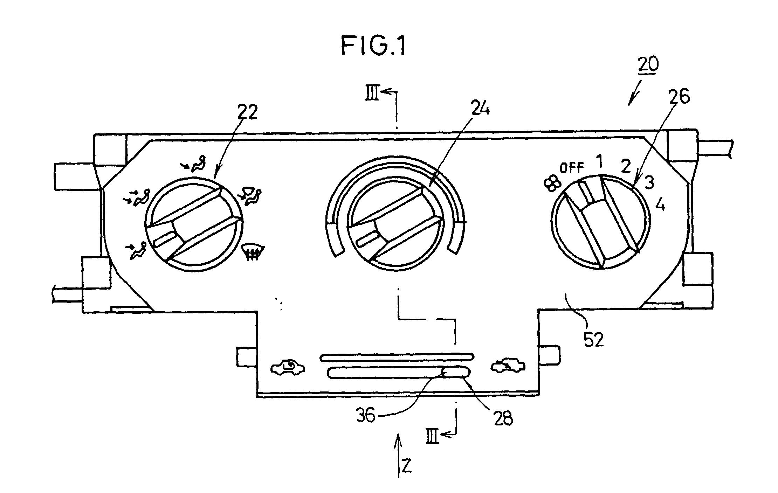

FIGS. 1 through 3 show a control panel assembly 20 of an air-conditioning unit for motor vehicles, which incorporates a sliding structure for a manual control member according to the present invention. The manual control member is used mean a manual control lever, a manual control knob, etc. In the following description, a sliding structure for a manual control lever will be described as a first embodiment, and a sliding structure for a manual control knob will be described as a second embodiment.

As shown in FIG. 1, the control panel assembly 20 has a circular mode selection control knob 22, a circular temperature setting control knob 24, and a circular fan selection control knob 26 which comprise manual control knobs and are positioned at spaced intervals in a horizontal linear array. The control panel assembly 20 also includes a manual control lever 28 positioned below the circular temperature setting control knob 24 and displaceable substantially horizontally.

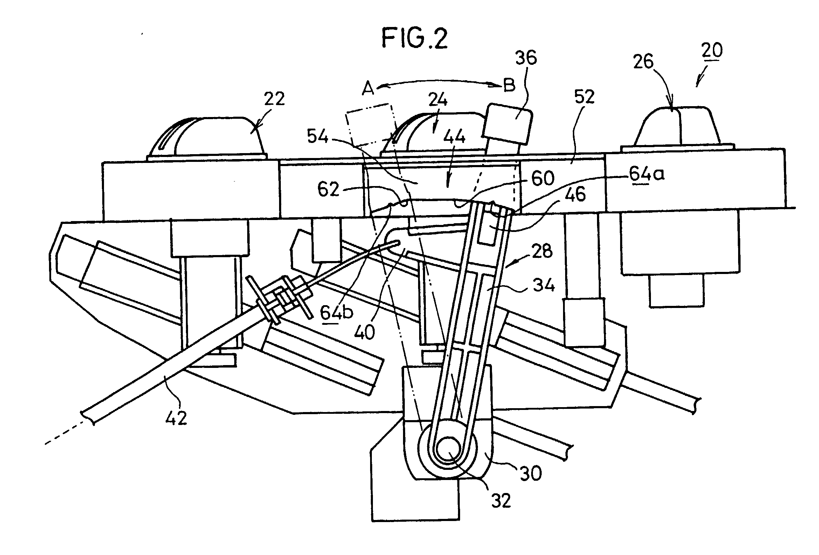

As shown in FIG. 2, the control lever 28 comprises a lever bar 34 angularly movable through a given angle about a shaft 32 mounted on an attachment base 30, and a grip 36 mounted on a distal end of the lever bar 34 and manually grippable by fingers of the user. A triangular arm plate 40 is fixed to the lever bar 34 between the shaft 32 and the grip 36 for angular displacement in unison with the control lever 28. A control cable 42 for transmitting manual control forces is coupled to the triangular arm plate 40.

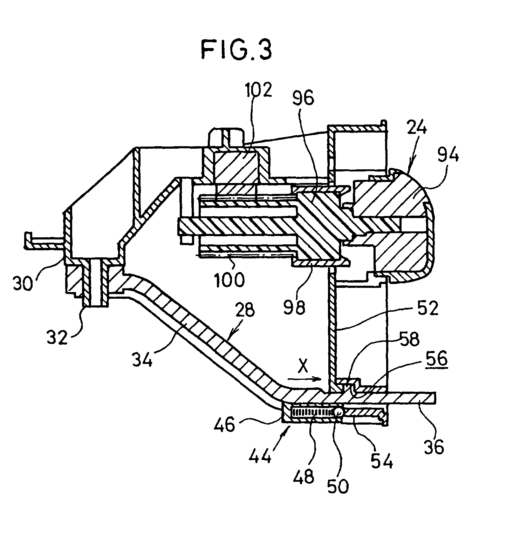

As shown in FIG. 3, a click mechanism 44 for stopping the control lever 28 at a desired angular position is disposed closely to the grip 36. The click mechanism 44 comprises a holder 46 angularly displaceable in unison with the control lever 28, a helical spring 48 disposed in a hole defined in the holder 46, a ball 50 engaging an end of the helical spring 48 and normally urged by the helical spring 48 in the direction indicated by the arrow X, and a click member 54 fixed to a control panel 52.

The control panel 52 has a guide groove 56 defined therein for guiding the control lever 28. The control lever 28 has a tooth 58 slidably received in the guide groove 56 for smooth angular movement guided by the guide groove 56.

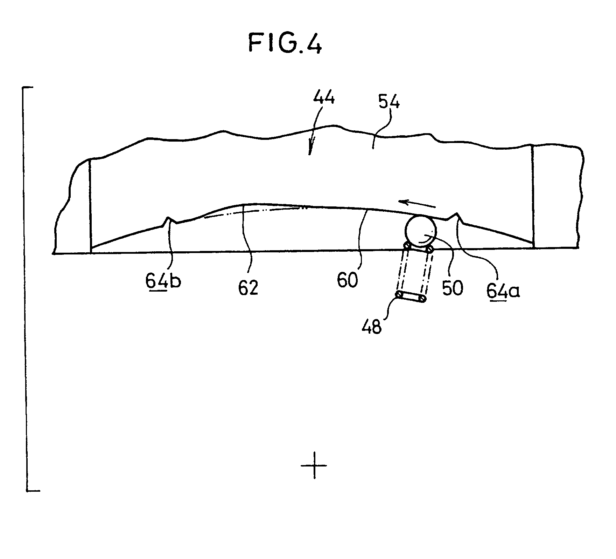

As shown in FIG. 4, the click member 54 has a concave engaging surface against which the ball 50 is held under the resiliency of the helical spring 48. The concave engaging surface comprises a first engaging surface 60 having a larger radius of curvature and a second engaging surface 62 defined in and contiguous to the first engaging surface 60 and having a radius of curvature smaller than the radius of curvature of the first engaging surface 60. The first and second engaging surfaces 60, 62 have respective click grooves 64a, 64b of V-shaped cross section which are spaced from each other. The control lever 28 remains stopped when the ball 50 engages in one of the click grooves 64a, 64b.

The control cable 42 has an end connected to the interior/exterior air selector 8 of the air-conditioning unit shown in FIG. 18. The interior/exterior air selector 8 is of the known structure and will not be described in detail below.

Operation and advantages of the control panel assembly 20 will be described below.

First, it is assumed that air to be introduced into the air-conditioning unit is to be switched from exterior air to interior air.

The driver of the motor vehicle grips the grip 36 and slides it horizontally in the direction indicated by the arrow A in FIG. 2. The control lever 28 is angularly moved about the shaft 32 while being guided by the guide groove 56 and stops at the position indicated by the two-dot-and-dash lines in FIG. 2. When the control lever 28 is thus angularly moved, the control cable 42 causes the first and second links 10, 13 (see FIG. 18) to turn respective about the first and third pins 9, 12 in the respective directions indicated by the arrows. The damper 15 is also angularly moved in unison with the second link 13 about the third pin 12 from the lowermost position to the uppermost position for thereby switching introduced air from exterior air to interior air.

When the control lever 28 is turned, the click mechanism 44 operates as follows: As the driver slides the control lever 28, the ball 50 housed in the holder 46 is angularly displaced in unison with the control lever 28 while rolling on the first and second engaging surfaces 60, 62.

Specifically, when the damper 15 starts moving from the lowermost position in which it introduces exterior air into the air-conditioning unit, the ball 50 pressed into the click groove 64a under the bias of the helical spring 48 moves out of the click groove 64a and is rollingly displaced along the first engaging surface 60 while being pressed by the helical spring 48. When the ball 50 reaches the second engaging surface 62 contiguous to the first engaging surface 60, the ball 50 is pressed against the second engaging surface 62, whose radius of curvature is smaller than that of the first engaging surface 60, under the resiliency of the helical spring 48, and is rollingly displaced along the second engaging surface 62. Then, the ball 50 engages in and pressed into the click groove 64b under the bias of the helical spring 48 for thereby stopping the control lever 28 when the damper 15 is held in the uppermost position in which it introduces interior air into the air-conditioning unit.

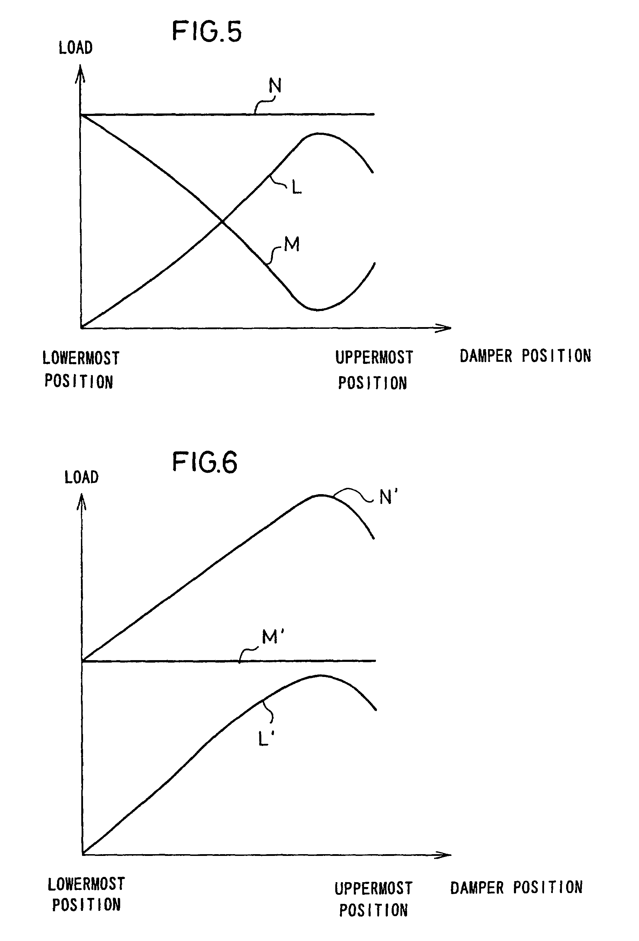

FIG. 5 shows the relationship between a load characteristic curve L representing a load due to the weight of the damper 15, a sliding characteristic curve M representing sliding properties between the ball 50 and the first and second engaging surfaces 60, 62, and a load characteristic curve N representing a load applied to the control lever 28 while the damper 15 is being angularly displaced from the lowermost to the uppermost position.

As can be seen from FIG. 5, the sliding characteristic curve M is in opposite phase with the load characteristic curve L, i.e., these characteristic curves M, L are in axis symmetry. Therefore, the load characteristic curve N, which is the sum of the characteristic curves M, L, is made substantially constant.

The radii of curvature of the first and second engaging surfaces 60, 62 are selected so as to correspond to the sliding characteristic curve M, so that the resistance imposed on the ball 50 by the first and second engaging surfaces 60, 62 as the ball 50 rolls on the first and second engaging surfaces 60, 62 varies according to the sliding characteristic curve M. In this manner, the load applied to the control lever 28 is rendered constant. As a result, the load characteristic curve N is constant, allowing the control lever 28 to apply control forces that are uniform and smooth in a full range thereof.

FIG. 6 shows characteristic curves with the conventional control lever 1 shown in FIG. 17. As shown in FIG. 6, a load characteristic curve N' representing a load applied to the control lever 1 is the sum of a sliding characteristic curve M' representing sliding properties between the engagement plate 6 and the leaf spring 7 and a load characteristic curve L' representing a load due to the weight of the damper 15. Therefore, as the damper 15 is angularly displaced from the lowermost position to the uppermost position, the load imposed on the control lever 1 becomes progressively greater. As a result, the conventional control lever 1 fails to produce control forces that are uniform and smooth in a full range thereof.

According to the illustrated embodiment, the load imposed on the control lever 28 can be made constant simply by making different the radii of curvature of the first and second engaging surfaces 60, 62 of the click member 54. The sliding structure according to the present embodiment is thus inexpensive to manufacture.

The conventional control lever 1 shown in FIG. 17 has the leaf spring 7 of predetermined spring forces which is held in engagement with the engagement plate 6. It is therefore difficult to vary the sliding resistance between the leaf spring 7 and the engagement plate 6 while the control lever 1 is being angularly displaced. According to the illustrated embodiment, however, since the ball 50 is pressed against the first and second engaging surfaces 60, 62 under the bias of the helical spring 48, it is possible to increase the amount of displacement which the ball 50 makes toward the first and second engaging surfaces 60, 62. Consequently, the sliding resistance between the first and second engaging surfaces 60, 62 and the ball 50 can be set to a desired value freely.

When the control lever 28 is slid in the opposite direction to turn the damper 15 from the uppermost position to the lowermost position, the load imposed on the control lever 28 is not varied because the control lever 28 is not affected by the weight of the damper 15. Accordingly, the control lever 28 can produce control forces that are uniform and smooth in a full range thereof while it is being slid in the opposite direction.

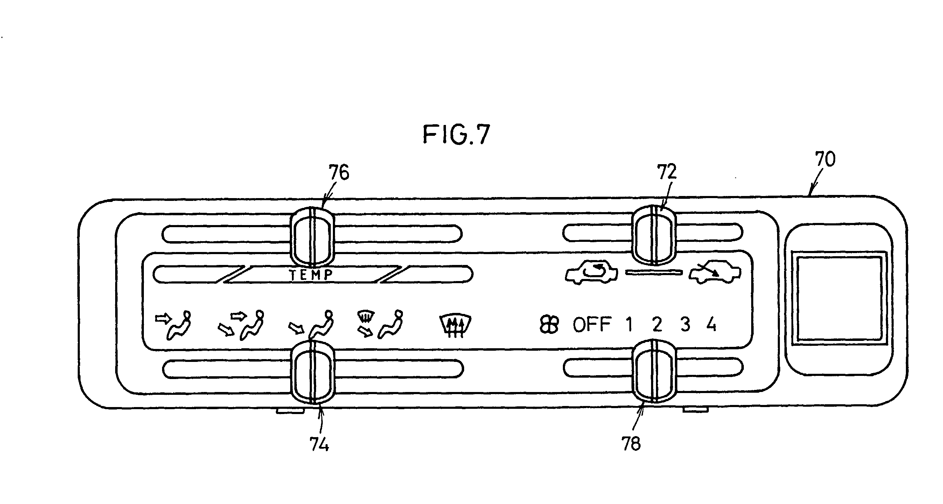

In the above embodiment, the sliding structure has been described with respect to the control lever 28 which is connected to the interior/exterior air selector 8 through the control cable 42 for switching between the introduction of exterior air and the introduction of interior air. However, as shown in FIG. 7, the sliding structure according to the present invention is also applicable to various control levers including an exterior/interior air selection control lever 72, a mode selection control lever 74, a temperature setting control lever 76 for selectively opening and closing a temperature adjustment damper (not shown) of a heater unit, and a fan selection control lever 78 in an air-conditioning unit 70 for motor vehicles.

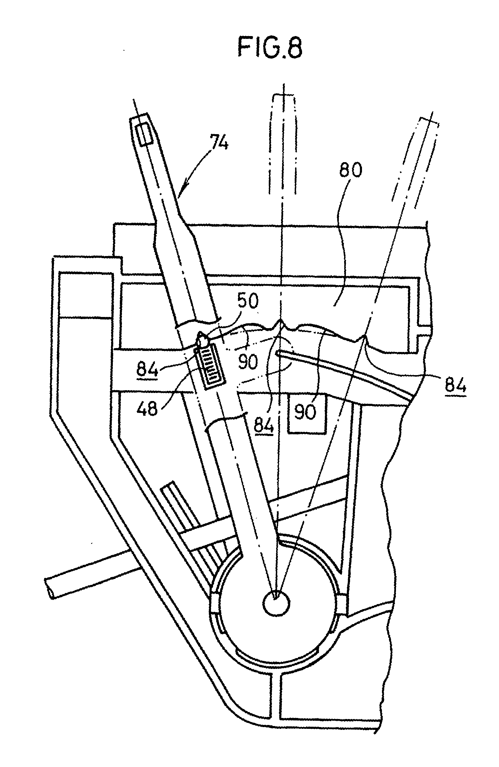

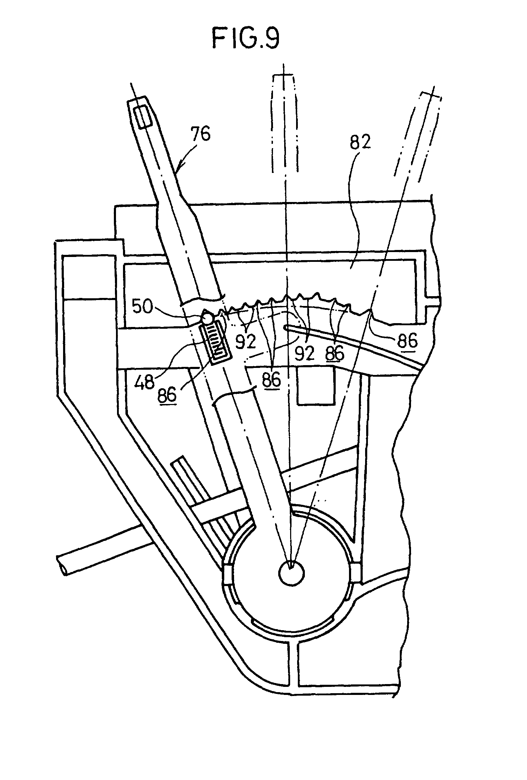

FIG. 8 shows a click member 80 associated with the mode selection control lever 74, and FIG. 9 shows a click member 82 associated with the temperature setting control lever 76. As shown in FIGS. 8 and 9, the click mechanisms 80, 82 have respective engaging surfaces 90, 92 which have a plurality of click grooves 84, 86 at corresponding lever stop positions. As shown in FIG. 8, the engaging surface 90 of the click member 80 has a radius of curvature corresponding to a curve which is in opposite phase to the load characteristic curve of a damper (not shown) which can selectively be opened and closed by the mode selection control lever 74. As shown in FIG. 9, the engaging surface 92 of the click member 82 has a radius of curvature corresponding to a curve which is in opposite phase to the load characteristic curve of a damper (not shown) which can selectively be opened and closed by the temperature setting control lever 76.

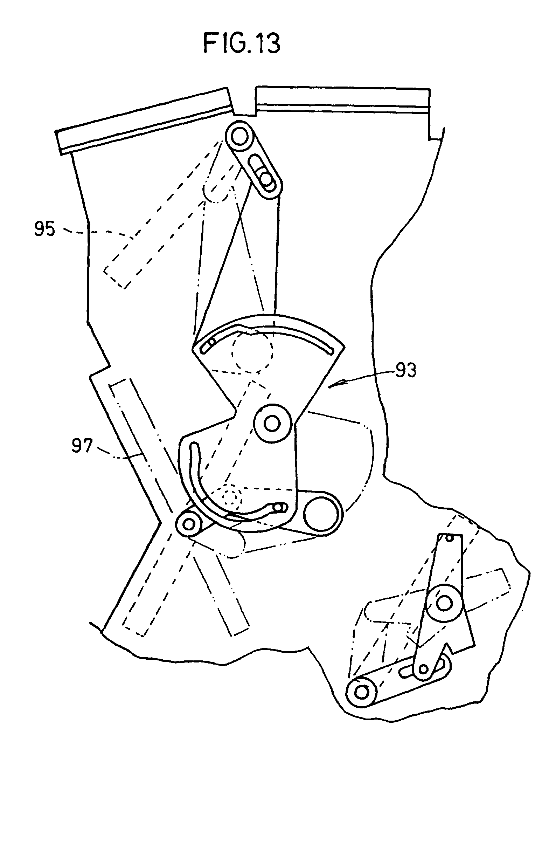

The sliding structure according to the present invention is also applicable to a control lever which, as shown in FIG. 13, opens and closes first and second dampers 95, 97 of a heater unit substantially simultaneously through a plurality of link mechanisms 93. When the first and second dampers 95, 97 which are openably and closably supported at one end thereof are simultaneously turned by the control lever through a control lever, the sliding structure which is incorporated is capable of reducing the load imposed on the control lever by the first and second dampers 95, 97 through the control cable.

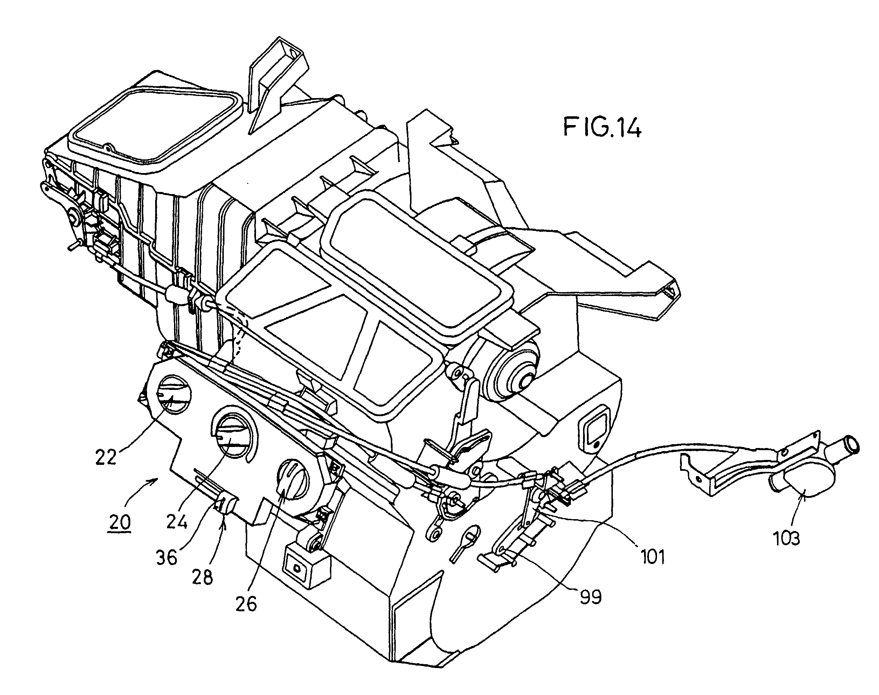

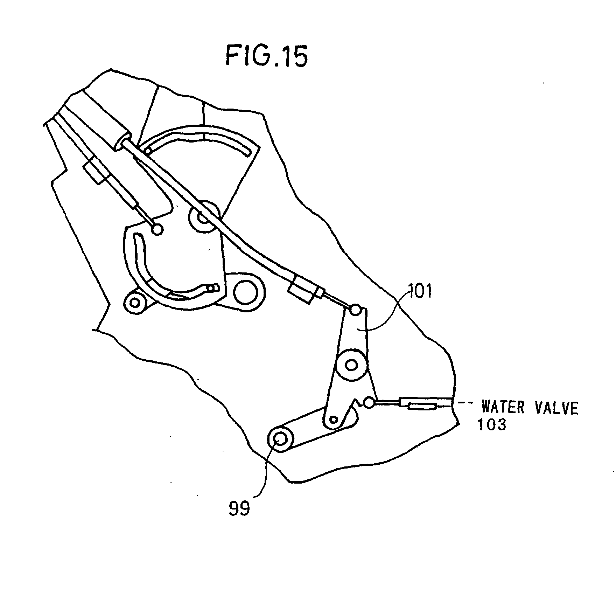

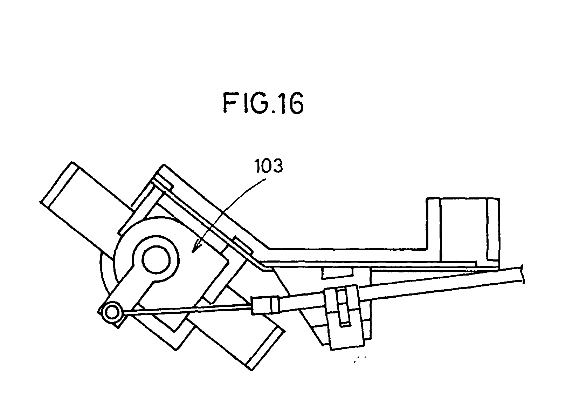

The sliding structure according to the present invention is further applicable to a control lever which, as shown in FIGS. 14 through 16, can operate an air mix damper (not shown) of a heater unit and a water valve 103. The air mix damper is openably and closably supported at one end thereof by a shaft 99, and the water valve 103 is openable and closable by the control lever through a link mechanism 101 that will operate the air mix damper.

When the air mix damper supported by the shaft 99 and the water valve 103 are operated substantially simultaneously, the sliding structure is capable of reducing the load applied from the air mix damper and the water valve 103 to the control lever.

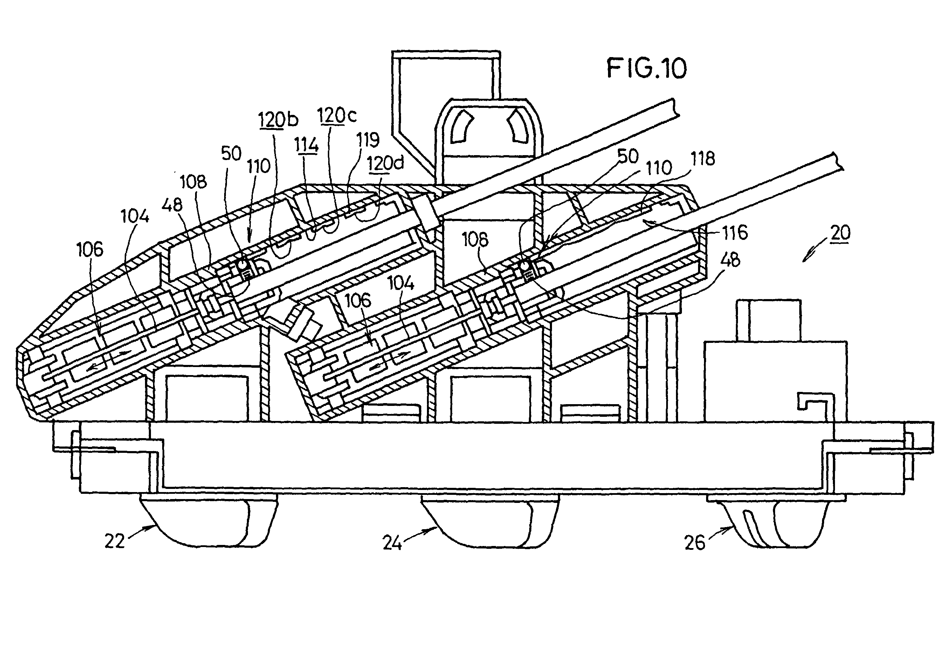

A sliding structure for a manual control knob according to another embodiment of the present invention is shown in FIGS. 3 and 10 through 12. FIG. 10 shows a mode selection control knob 22, a temperature setting control knob 24, and a fan selection control knob 26. Since these control knobs 22, 24, 26 are identical to each other, only the temperature setting control knob 24 will be described in detail below.

As shown in FIG. 3, the temperature setting control knob 24 has a grip 94 which is shaped so as to be easily gripped by fingers of the user and a shaft 96 of synthetic resin having an end securely fitted in an end defined in the grip 94. The shaft 96 is rotatably supported by a bearing 98 that is mounted in a hose defined in the control panel 52. A pinion gear 100 is defined on an outer circumferential surface of an opposite end portion of the shaft 96 and held in mesh with a rack gear 102 connected to a control cable 104 (see FIG. 10). When the grip 94 is turned, the shaft 96 is turned, causing the pinion gear 100 and the rack gear 102 in mesh therewith to displace the control cable 104 for opening or closing a temperature adjustment damper (not shown) of an air-conditioning unit to make temperature adjustments.

As shown in FIG. 10, a slider 106 is fixed to the rack gear 102 which is linearly displaceably disposed in an elongate housing 108. The control cable 104 has an end connected to the slider 106. Consequently, when the shaft 96 is turned, the pinion gear 100 and the rack gear 102 in mesh therewith displace the slider 106 thereby to axially move the control cable 104 in either one of the directions indicated by the arrows.

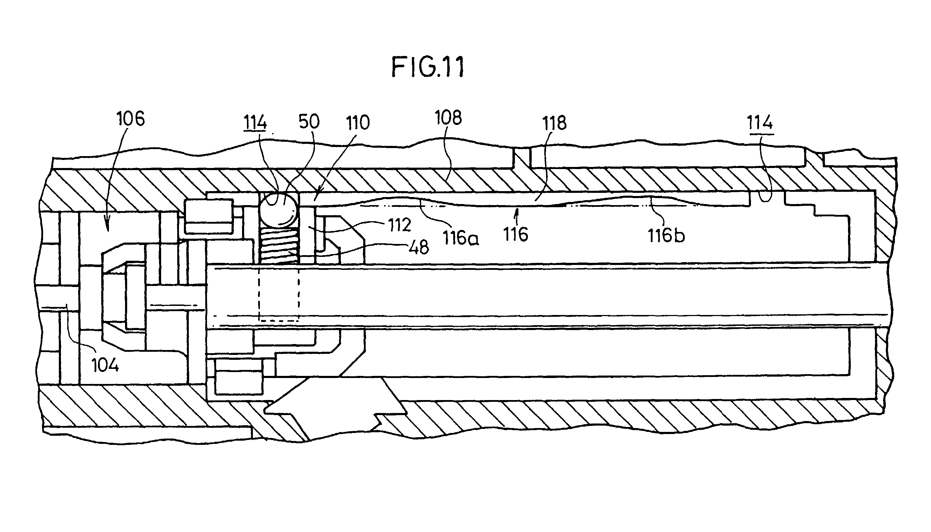

The slider 106 is associated with a click mechanism 110. As shown in FIG. 11, the click mechanism 110 comprises a helical spring 48, a ball 50 normally urged by the helical spring 48, a holder 112 which holds the ball 50, and a click member 118 having an engaging surface 116 which has a click groove 114 of rectangular cross section for stopping the temperature setting control knob 24 at a certain angular position.

The engaging surface 116 comprises a plurality of spaced concave surfaces 116a, 116b having different radii of curvature and a linear surface therebetween. The radii of curvature of the concave surfaces 116a, 116b are selected to correspond to a curve which is in opposite phase with a load characteristic curve (not shown) representing a load due to the weight of a temperature adjustment damper. Accordingly, the load imposed on the temperature setting control knob 24 at the time it is turned is made constant. The sliding structure is thus capable of producing uniform and smooth control forces in a full range thereof for the temperature setting control knob 24.

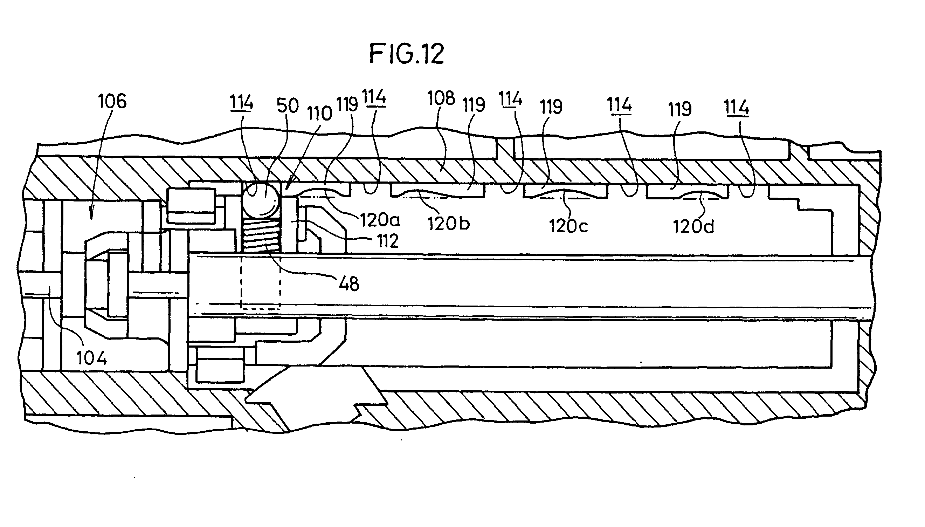

FIG. 12 shows a click member 119 of the mode selection control knob 22, which has a plurality of engaging surfaces 120a - 120d and a click groove 114. The structure shown in FIG. 12 offers the same advantages as those of the sliding structure shown in FIG. 11.

The sliding structure according to the embodiment shown in FIGS. 10 through 12 can be incorporated in the mechanisms shown in FIGS. 13 - 16.

Although certain preferred embodiments of the present invention has been shown and described in detail, it should be understood that various changes and modifications may be made therein without departing from the scope of the appended claims.

A click mechanism (44) comprises a click member (54) having a first engaging surface (60) and a second engaging surface (62) with click grooves (64a, 64b) defined therein, a helical spring (48), and a ball (50) normally urged to engage the first and second engaging surfaces (60, 62) under resilient forces from the helical spring (48). The first and second engaging surfaces (60, 62) have respective different radii of curvature.

## Claims

1. A sliding structure comprising:
a manual control member (22, 24, 26, 28, 28, 72, 74, 76, 78) manually displaceable for transmitting control forces through a force transmission member (42) to controllable member (15, 95, 97, 103); and
a click mechanism (44, 110) for stopping said manual control member (22, 24, 26, 28, 72, 74, 76, 78) at a predetermined position;
said click mechanism (44, 110) comprising a click member (54, 80, 82, 118, 119) having an engaging surface (60, 62, 90, 92, 116, 120a - 120d) having a click groove (64a, 64b, 84, 86, 110, 114) defined therein, a resilient element (48), and a movable element (50) normally urged to engage said engaging surface (60, 62, 90, 92, 116, 120a - 120d) and said click groove (64a, 64b, 84, 86, 110, 114) under resilient forces from said resilient element (48); **characterized in that**
said engaging surface (60, 62, 90, 92, 116, 120a - 120d) comprises a curved surface corresponding to a curve which is in opposite phase to a load characteristic curve representing a load due to the weight of said controllable member (15, 95, 97, 103).

2. A sliding structure according to claim 1, **characterized in that** said manual control member comprises a manual control lever (28, 72, 74, 76, 78) having a grip (36) on an end thereof manually displaceable for transmitting control forces through a force transmission member (42) to said controllable member (15, 95, 97, 103);
said movable element (50) being displaceable in unison with said manual control lever (28, 72, 74, 76, 78); and
said engaging surface (60, 62, 90, 92, 116, 120a - 120d) being defined by a plurality of curves having different radii of curvature, respectively.

3. A sliding structure according to claim 2, wherein said manual control lever comprises at least one of an exterior/interior air selection control lever (28, 72), a mode selection control lever (74), a temperature setting control lever (76), and a fan selection control lever (78) in an air conditioning unit (70) for a motor vehicle.

4. A sliding structure according to one of the preceding claims, wherein said resilient element comprises a helical spring (48) and said movable element comprises a ball (50) normally held against said engaging surface (60, 62, 90, 92) by said helical spring (48)

5. A sliding structure according to claim 1, **characterized in that**:
said manual control member comprises a manual control knob (22, 24, 26) manually angularly movable for transmitting control forces through a force transmission member (42) to a controllable member (15, 95, 97, 103);
a said click member (118, 119) having a plurality of click grooves (114) for stopping said manual control knob (22, 24, 26) at respective predetermined positions, said engaging surface (116, 120a - 120d) being defined between said click grooves (114).

6. A sliding structure according to claim 5, wherein said manual control knob comprises at least one of an exterior/interior air selection control knob, a mode selection control knob (22), a temperature setting control knob (24), and a fan selection control knob (26) in an air-conditioning unit for a motor vehicle.

7. A sliding structure according to claim 5 or claim 6, wherein said resilient element comprises a helical spring (48) and said movable element comprises a ball (50) normally held against said engaging surface (116, 120a - 120d) by said helical spring (48).

8. A sliding structure according to claims 1, wherein said controllable member comprises a damper (15) disposed in a heater control device and supported at one end thereof for vertical angular movement, whereby sliding resistance between said engaging surface (60, 62, 90, 92) of said click member (54, 80, 82) and said movable element (50) can be reduced when said damper (50) is angularly moved upwardly by said manual control member.

9. A sliding structure according to claim 1, wherein said controllable member comprises a plurality of dampers (95, 97) disposed in a heater control device and supported at one end thereof for angular movement through a plurality of links (93), whereby sliding resistance between said engaging surface (90, 92, 116, 120a - 120d) of said click member (80, 82, 118) and said movable element (50) can be reduced when said dampers (95, 97) are simultaneously operated by said manual control member through said links (93).

10. A sliding structure according to claim 1, wherein said controllable member comprises a damper (15) disposed in a heater control device and supported at one end thereof for angular movement through a link mechanism (101), and a water valve (103) selectively openable and closable through said link mechanism (101), whereby sliding resistance between said engaging surface (90, 92, 116, 120a-120d) of said click member (80, 82, 118) and said movable element (50) can be reduced when said damper (15) and said water valve (103) are simultaneously operated by said manual control member through said link mechanism (101).

## Patentansprüche

1. Gleitstruktur, umfassend:
ein manuelles Steuerelement (22, 24, 26, 28, 28, 72, 74, 76, 78), das manuell verlagerbar ist, um Steuerkräfte durch ein Kraftübertragungselement (42) auf ein steuerbares Element (15, 95, 97, 103) zu übertragen; und
einen Rastmechanismus (44, 110), um das manuelle Steuerelement (22, 24, 26, 28, 72, 74, 76, 78) in einer vorbestimmten Stellung zu stoppen;
wobei der Rastmechanismus (44, 110) ein Rastelement (54, 80, 82, 118, 119) aufweist, das eine Eingriffsfläche (60, 62, 90, 92, 116, 120a - 120d) aufweist, in der eine Rastnut (64a, 64b, 84, 86, 110, 114) definiert ist, ein elastisches Element (48) sowie ein bewegliches Element (50), das unter den Federkräften von dem elastischen Element (48) normalerweise zum Eingriff mit der Eingriffsfläche (60, 62, 90, 92, 116, 120a - 120d) und der Rastnut (64a, 64b, 84, 86, 110, 114) gedrückt wird; **dadurch gekennzeichnet, dass** die Eingriffsfläche (60, 62, 90, 92, 116, 120a - 120d) eine gekrümmte Oberfläche aufweist, die einer Kurve entspricht, die zu einer Lastkennlinie, welche eine Last aufgrund des Gewichts des steuerbaren Elements (15, 95, 97, 103) repräsentiert, gegenphasig ist.

2. Gleitstruktur nach Anspruch 1, **dadurch gekennzeichnet, dass** das manuelle Steuerelement einen manuellen Steuerhebel (28, 72, 74, 76, 78) aufweist, der an seinem einen Ende einen Griff (36) aufweist, der zum Übertragen von Steuerkräften durch ein Kraftübertragungselement (42) zu dem steuerbaren Element (15, 95, 97, 103) manuell verlagerbar ist;
wobei das bewegbare Element (50) gemeinsam mit dem manuellen Steuerhebel (28, 72, 74, 76, 78) verlagerbar ist; und
wobei die Eingriffsfläche (60, 62, 90, 92, 116, 120a - 120d) durch eine Mehrzahl von Kurven mit jeweils unterschiedlichen Krümmungsradien definiert ist.

3. Gleitstruktur nach Anspruch 2, wobei der manuelle Steuerhebel zumindest einen eines Außen/Innenluftwählsteuerhebels (28, 72), eines Moduswählsteuerhebels (74), eines Temperatureinstellsteuerhebels (76) und eines Gebläsewählsteuerhebels (78) in einer Klimaanlageneinheit (70) für ein Kraftfahrzeug umfasst.

4. Gleitstruktur nach einem der vorhergehenden Ansprüche, worin das elastische Element eine Schraubenfeder (48) aufweist und das bewegbare Element eine Kugel (50) aufweist, die durch die Schraubenfeder (48) normalerweise gegen die Eingriffsfläche (60, 62, 90, 92) gehalten wird.

5. Gleitstruktur nach Anspruch 1, **dadurch gekennzeichnet, dass**:
das manuelle Steuerelement einen manuellen Steuerknopf (22, 24, 26) aufweist, der zum Übertragen von Steuerkräften durch ein Kraftübertragungselement (42) auf ein steuerbares Element (15, 95, 97, 103) manuell im Winkel bewegbar ist;
wobei das Rastelement (118, 119) eine Mehrzahl von Rastnuten (114) aufweist, um den manuellen Steuerknopf (22, 24, 26) an jeweiligen vorbestimmten Stellungen zu stoppen, wobei die Eingriffsfläche (116, 120a - 120d) zwischen den Rastnuten (114) definiert ist.

6. Gleitstruktur nach Anspruch 5, worin der manuelle Steuerknopf zumindest einen eines Außenllnnenluftwählsteuerknopfs, eines Moduswählsteuerknopfs (22), eines Temperatureinstellsteuerknopfs (24) und eines Gebläsewählsteuerknopfs (26) in einer Klimaanlageneinheit für ein Kraftfahrzeug umfasst.

7. Gleitstruktur nach Anspruch 5 oder Anspruch 6, worin das elastische Element eine Schraubenfeder (48) aufweist und das bewegbare Element eine Kugel (50) aufweist, die durch die Schraubenfeder (48) normalerweise gegen die Eingriffsfläche (116, 120a - 120d) gehalten wird.

8. Gleitstruktur nach Anspruch 1, worin das steuerbare Element einen Dämpfer (15) aufweist, der in einer Heizsteuervorrichtung angeordnet und an seinem einen Ende zur vertikalen Winkelbewegung gelagert ist, wodurch der Gleitwiderstand zwischen der Eingriffsfläche (60, 62, 90, 92) des Rastelements (54, 80, 82) und dem bewegbaren Element (50) reduziert werden kann, wenn der Dämpfer (50) durch das manuelle Steuerelement im Winkel aufwärts bewegt wird.

9. Gleitstruktur nach Anspruch 1, worin das steuerbare Element eine Mehrzahl von Dämpfern (95, 97) aufweist, die in einer Heizsteuervorrichtung angeordnet sind und die an ihrem einen Ende zur Winkelbewegung durch eine Mehrzahl von Gliedern (93) gelagert sind, wodurch der Gleitwiderstand zwischen der Eingriffsfläche (90, 92, 116, 120a - 120d) des Rastelements (80, 82, 118) und dem bewegbaren Element (50) reduziert werden kann, wenn die Dämpfer (95, 97) mit dem manuellen Steuerelement durch die Glieder (93) gleichzeitig betätigt werden.

10. Gleitstruktur nach Anspruch 1, worin das steuerbare Element einen Dämpfer (15) aufweist, der in einer Heizsteuervorrichtung angeordnet ist und der an seinem einen Ende zur Winkelbewegung durch einen Gliedermechanismus (101) gelagert ist, und ein Wasserventil (103), das durch den Gliedermechanismus (101) selektiv öffen- und schließbar ist, wodurch der Gleitwiderstand zwischen der Eingriffsfläche (90, 92, 116, 120a - 120d) des Rastelements (80, 82, 118) und dem bewegbaren Element (50) reduziert werden kann, wenn der Dämpfer (15) und das Wasserventil (103) mit dem manuellen Steuerelement durch den Gliedermechanismus (101) gleichzeitig betätigt werden.

## Revendications

1. Structure de coulissement, comportant :
un élément de commande manuelle (22, 24, 26, 28, 72, 74, 76, 78) pouvant être déplacée manuellement pour transmettre des forces de commande, à travers un élément de transmission de forces (42), à un élément pouvant être commandé (15, 95, 97, 103), et
un mécanisme à cliquet (44, 110) destiné à arrêter ledit élément de commande manuelle (22, 24, 26, 28, 72, 74, 76, 78) dans une position prédéterminée,
ledit mécanisme à cliquet (44, 110) comportant un élément de cliquet (54, 80, 82, 118, 119) ayant une surface de mise en prise (60, 62, 90, 92, 116, 120a-120d) ayant une gorge de cliquet (64a, 64b, 84, 86, 110, 114) définie dans celle-ci, un élément élastique (48) et un élément mobile (50) normalement poussé pour mettre en prise ladite surface de mise en prise (60, 62, 90, 92, 116, 120a-120d) et ladite gorge de cliquet (64a, 64b, 84, 86, 110, 114) sous des forces élastiques à partir dudit élément élastique (48), **caractérisée en ce que**
ladite surface de mise en prise (60, 62, 90, 92, 116, 120a-120d) comporte une surface incurvée correspondant à une courbe qui est en phase opposée à une courbe caractéristique de charge représentant une charge due au poids dudit élément pouvant être commandé (15, 95, 97, 103).

2. Structure de coulissement selon la revendication 1, **caractérisée en ce que** ledit élément de commande manuelle comporte un levier de commande manuelle (28, 72, 74, 76, 78), ayant un élément de préhension (36) à une extrémité, pouvant être déplacé manuellement pour transmettre des forces de commande, à travers un élément de transmission de forces (42), audit élément pouvant être commandé (15, 95, 97, 103),
ledit élément mobile (50) pouvant être déplacé à l'unisson avec ledit levier de commande manuelle (28, 72, 74, 76, 78), et
ladite surface de mise en prise (60, 62, 90, 92, 116, 120a-120d) étant définie par une pluralité de courbes ayant différents rayons de courbure, respectivement.

3. Structure de coulissement selon la revendication 2, dans laquelle ledit levier de commande manuelle comporte au moins un levier parmi un levier de commande de sélection d'air extérieur/intérieur (28, 72), un levier de commande de sélection de mode (74), un levier de commande de réglage de température (76) et un levier de commande de sélection de ventilation (78) dans une unité de climatisation (70) destinée à un véhicule automobile.

4. Structure de coulissement selon l'une quelconque des revendications précédentes, dans laquelle ledit élément élastique comporte un ressort hélicoïdal (48), et ledit élément mobile comporte une bille (50) normalement maintenue contre ladite surface de mise en prise (60, 62, 90, 92) par ledit ressort hélicoïdal (48).

5. Structure de coulissement selon la revendication 1, **caractérisée en ce que** :
ledit élément de commande manuelle comporte un bouton de commande manuelle (22, 24, 26) manuellement mobile de manière angulaire pour transmettre des forces de commande, à travers un élément de transmission de forces (42), à un élément pouvant être commandé (15, 95, 97, 103),
ledit élément de cliquet (118, 119) ayant une pluralité de gorges de cliquet (114) destinées à arrêter ledit bouton de commande manuelle (22, 24, 26) dans des positions prédéterminées respectives, ladite surface de mise en prise (116, 120a-120d) étant définie entre lesdites gorges de cliquet (114).

6. Structure de coulissement selon la revendication 5, dans laquelle ledit bouton de commande manuelle comporte au moins un bouton parmi un bouton de commande de sélection d'air extérieur/intérieur, un bouton de commande de sélection de mode (22), un bouton de commande de réglage de température (24) et un bouton de commande de sélection de ventilation (26) dans une unité de climatisation destinée à un véhicule automobile.

7. Structure de coulissement selon la revendication 5 ou 6, dans laquelle ledit élément élastique comporte un ressort hélicoïdal (48), et ledit élément mobile comporte une bille (50) normalement maintenue contre ladite surface de mise en prise (116, 120a-120d) par ledit ressort hélicoïdal (48).

8. Structure de coulissement selon la revendication 1, dans laquelle ledit élément pouvant être commandé comporte un amortisseur positionné dans un dispositif de commande de dispositif de chauffage et supporté au niveau d'une extrémité pour un déplacement angulaire vertical, de sorte qu'une résistance au coulissement entre ladite surface de mise en prise (60, 62, 90, 92) dudit élément de cliquet (54, 80, 82) et ledit élément mobile (50) peut être réduite lorsque ledit amortisseur (50) est déplacé de manière angulaire vers le haut par ledit élément de commande manuelle.

9. Structure de coulissement selon la revendication 1, dans laquelle ledit élément pouvant être commandé comporte une pluralité d'amortisseurs (95, 97) positionnés dans un dispositif de commande de dispositif de chauffage et supportés au niveau d'une extrémité pour un déplacement angulaire à travers une pluralité de liaisons (93), de sorte qu'une résistance au coulissement entre ladite surface de mise en prise (90, 92, 116, 120a-120d) dudit élément de cliquet (80, 82, 118) et ledit élément mobile (50) peut être réduite lorsque lesdits amortisseurs (95, 97) sont actionnés de manière simultanée par ledit élément de commande manuelle à travers lesdites liaisons (93).

10. Structure de coulissement selon la revendication 1, dans laquelle ledit élément pouvant être commandé comporte un amortisseur (15) positionné dans un dispositif de commande de dispositif de chauffage et supporté au niveau d'une extrémité pour un déplacement angulaire à travers un mécanisme de liaison (101), et une vanne à eau (103) pouvant être ouverte et fermée de manière sélective par l'intermédiaire dudit mécanisme de liaison (101), de sorte qu'une résistance au coulissement entre ladite surface de mise en prise (90, 92, 116, 120a-120d) dudit élément de cliquet (80, 82, 118) et ledit élément mobile (50) peut être réduite lorsque ledit amortisseur (15) et ladite vanne à eau (103) sont actionnés de manière simultanée par ledit élément de commande manuelle par l'intermédiaire dudit mécanisme de liaison (101).
